# EUROPÄISCHE PATENTANMELDUNG

(11) **EP 3 236 045 A1**
(43) Veröffentlichungstag der Anmeldung: **25.10.2017**
(21) Anmeldenummer: 17000549.0
(22) Anmeldetag: 03.04.2017
(51) Int. Cl.: F02B 61/04

(54) **AUSSENBORDMOTOR, UMFASSEND EINE BRENNKRAFTMASCHINE**

(30) Priorität: 24.04.2016 DE 102016004766
(71) Anmelder: Neander Motors AG, 24143 Kiel (DE)
(72) Erfinder: BRÜSTLE, Claus, D-74228 Nordheim (DE)

(57) **Zusammenfassung**

Dieser Außenbordmotor, umfassend eine Brennkraftmaschine, zum Antrieb eines Schiffs ist mit einem Luftführungssystem ausgestatte, das unter Vermittlung von einer Oberflächen der Brennkraftmaschine und Nebenaggregate umgebenden Abdeckhaube wirksam, ist welche Abdeckhaube mit einer oder mehreren Ein- und Auslassöffnungen für in einem Innenraum der Abdeckhaube bewegte Luftströme versehen ist, wobei ein über die Brennkraftmaschine angetriebenes Gebläse die Luftströme im Innenraum der Abdeckhaube zumindest teilweise beeinflusst.

Um dieses Luftführungssystem zu optimieren treten über eine Einlassöffnung Luftströme in Richtung Innenraum der Abdeckhaube eintreten, die benachbart der Einlassöffnung in erste Teilluftströme und zweite Teilluftströme getrennt werden, wobei das Luftführungssystem in der Abdeckhaube eine erste Leiteinrichtung für die ersten Teilströme und eine zweite Leiteinrichtung für die zweiten Teilluftströme umfasst, welche ersten Teilluftströme als Ansaugluft einer Sauganlage der Brennkraftmaschine zugeführt werden und welche zweiten Teilluftströme mit Unterstützung des Gebläses die durch den Betrieb der Brennkraftmaschine erwärmten Oberflächen der Brennkraftmaschine und der Nebenaggregate beaufschlagen und dass die von den Oberflächen der Brennkraftmaschine und den Nebenaggregaten erwärmten Luftströme vom Gebläse und einer dritten Leiteinrichtung als Abluft über eine Auslassöffnung in der Abdeckhaube an eine Außenseite der besagten Abdeckhaube bzw. in die Atmosphäre gefördert werden.

## Beschreibung

Die Erfindung betrifft einen Außenbordmotor, umfassend eine Brennkraftmaschine, zum Antrieb eines Schiffs mit einem Luftführungssystem, das unter Vermittlung von einer Oberflächen der Brennkraftmaschine und Nebenaggregate umgebenden Abdeckhaube wirksam ist.

Es ist eine Brennkraftmaschine bekannt, US 6,302,749 B1, die als Außenbordmotor zum Antrieb eines Wasserfahrzeugs arbeitet. Die Brennkraftmaschine wird von einer Abdeckhaube umgeben, die einen Innenraum begrenzt. Zur Be- und Entlüftung des Innenraums sind an der die Brennkraftmaschine weitreichend umhüllenden Abdeckhaube Ein- und Auslasseinrichtungen für im Innenraum bewegte zur Beaufschlagung von Gehäuseoberflächen der Brennkraftmaschine dienende Luftströme vorgesehen. Die Brennkraftmaschine umfasst eine aufrecht stehende mit mehreren Kolben zusammenwirkende Kurbelwelle, die an einem oberen Endbereich mittels eines Endlostriebs Ausgleichswellen antreibt. Eine Lichtmaschine mit aufrechter Drehachse ist mit einem Gebläse versehen, das den Innenraum einer haubenartigen Endlostriebabdeckung be- und entlüftet.

Die DE 102 05 109 B4 gibt einen Außenbordmotor wieder, der mit einer senkrecht ausgerichteten Kurbelwelle und mehreren an einer Außenseite eines Maschinengehäuses des Außenbordmotors angebrachten Nebenaggregaten versehen ist. Eine Abdeckhaube umhüllt den Außenbordmotor bzw. die Nebenaggregate. An einer rückwärtigen Seite der Abdeckhaube sind Lufteinlassschlitze vorgesehen, die mit einer angrenzenden Luftleitvorrichtung zusammenwirken. Die Luftleitvorrichtung sorgt dafür, dass Frischluft in einen oberen und einen unteren Bereich des Innenraums der Abdeckhaube bzw. an das Maschinengehäuse und an die Nebenaggregate geleitet wird.

Aufgabe der Erfindung ist es, eine Brennkraftmaschine für einen Außenbordmotor zum Antrieb eines Schiffs zu konzipieren, bei dem im Innenraum einer die Brennkraftmaschine umgebenden Abdeckhaube ein sich bezüglich der Kühlluft- und der Ansaugluftversorgung für die Brennkraftmaschine dienendes und Maßstäbe setzendes Luftführungssystem vorgesehen ist. Dabei sollte aber auch sichergestellt sein, dass das Luftführungssystem mit vertretbaren Mitteln umsetzbar ist.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das Luftführungssystem, das in Verbindung mit der mittels der Abdeckhaube verkleideten Brennkraftmaschine des Außenbordmotors sich durch eine vorbildliche Funktion und leichte Umsetzbarkeit auszeichnet. So werden Luftströme über eine Einlassöffnung auf ausgeklügelte Art und Weise in Richtung Innenraum der Abdeckhaube geleitet, dergestalt, dass diese Luftströme nahe der Einlassöffnung in erste Teilluftströme und zweite Teilluftströme getrennt werden. In diesem Zusammenhang ist hervorzuheben, dass das Luftführungssystem in der Abdeckhaube ein eine erste Leiteinrichtung für die ersten Teilluftströmeströme und eine zweite Leiteinrichtung für zweiten Teilluftströme umfasst. Es ist vorteilhaft, dass die ersten Teilluftströme als Ansaugluft der Sauganlage der Brennkraftmaschine zugeführt und dass die zweiten Teilluftströme mit Unterstützung des Gebläses die durch den Betrieb der Brennkraftmaschine erwärmten Oberflächen der besagten Brennkraftmaschine und Nebenaggregate kühlend beaufschlagen. Technisch günstig ist dabei, dass die von den Oberflächen der Brennkraftmaschine und den Nebenaggregaten erwärmten Luftströme vom Gebläse und einer dritten Leiteinrichtung als Abluft über eine Auslassöffnung in der Abdeckhaube an eine Außenseite von letzterer bzw. in die Atmosphäre gefördert werden.

Es ist baulich einfach zu realisieren, die Einlassöffnung an der aufrechten Haubenwand im oberen Endbereich der Abdeckhaube anzuordnen, wobei an die Einlassöffnung die das Luftführungssystem optimierende Verteilereinrichtung in der Abdeckhaube anschließt. Über die Verteilereinrichtung wird der erste Teilluftstrom und der zweite Teilluftstrom in die erste Leiteinrichtung bzw. die zweite Leiteinrichtung geführt wird. Beispiel gebend ist dabei, dass die erste Leiteinrichtung mit einem oberen Haubenabschnitt der Abdeckhaube einen Kanalbereich bildet, der mit einem beispielsweise horizontal ausgerichteten und Viereckform aufweisenden Ausgangsbereich an einen korrespondierenden Eingangsbereich zur Sauganlage hin angeschlossen ist. Ingeniös gestaltet ist, dass zum Öffnen der Abdeckhaube der Ausgangsbereich und der Eingangsbereich voneinander trennbar sind, die unter Zwischenschaltung eines ringförmigen Dichtkörpers zusammenwirken. Eine bemerkenswerte Festlegung ist, dass der Eingangsbereich an einen Sammelbehälter angeschlossen ist, der mit dem Verdichter der mit der Sauganlage verbundenen Turboladereinrichtung baulich vereinigt ist.

Maßstäbe setzt die Bauweise, bei der die zweiten Teilluftströme über die zweite Leiteinrichtung mittels des aufrechten Kanals in Richtung der Unterseite der Brennkraftmaschine geleitet und von dort über den Überströmbereich in den Innenraum der Abdeckhaube gelangt, und zwar dergestalt, dass die zweiten Teilluftströme die Oberflächen der Brennkraftmaschine und der Nebenaggregate entwärmend beeinflussen. Ausgestaltend wirkt hierbei, dass der Kanal einerseits durch den Haubenabschnitt der aufrechten Haubenwand und andererseits durch Begrenzungsabschnitte des Einsatzes der Abdeckhaube gebildet. Und positiv ist darüber hinaus, dass der Kanalbereich und der Einsatz durch Kleben, Schrauben oder dgl. mit der Abdeckhaube verbunden sind.

Die Weiterbildung der Erfindung wird dadurch begünstigt, dass das Gebläse unter Vermittlung der aufrechten über die Oberseite der Brennkraftmaschine hinausragenden aufrechten Kurbelwelle angetrieben wird. Die Wirkung des Luftführungssystems wird dadurch optimiert, dass in Fahrtrichtung des Schiffs betrachtet die Einlassöffnung benachbart der hinten liegenden Haubenwand und das Gebläse an der Kurbelwelle nahe der vorderen Haubenwand angeordnet sind. Die Technik bereichernd wirkt sich aus, dass die das Gebläse antreibende erste Kurbelwelle zusammen mit der parallel zur ersten Kurbelwelle verlaufenden zweiten Kurbelwelle das Kurbelwellensystem der Brennkraftmaschine bilden, bei dem die Kurbelwellen über zwei Pleuel mit wenigstens einem Hubkolben in Wirkverbindung stehen. Letzteres wird dadurch aufgebessert, dass die quer zur Fahrtrichtung beiderseits einer Mittellängsebene angeordneten Kurbelwellen an ihren über die Oberseite der Brennkraftmaschine hinausragenden oberen Enden erste und zweite Schwungräder aufweisen, die in Höhenrichtung der Kurbelwellen betrachtet versetzt zueinander angeordnet sind und sich bereichsweise überlappen, wobei das Gebläse mit dem oberen ersten Schwungrad baulich vereinigt ist.

Von hohem konstruktivem Rang ist, dass das erste Schwungrad mit Gebläse und das zweite untere Schwungrad mit einem ersten oberen Haubenabschnitt bzw. einem zweiten unteren Haubenabschnitt abgedeckt sind, die als eine aus einem Stück hergestellte oder aus mehreren Teilen bestehende Gebläse-Schwungradabdeckung ausgebildet sind. Eine richtungsweisende Ausführung ist, dass der erste das Gebläse verkleidende Haubenabschnitt mit der dritten Leiteinrichtung versehen ist, der über einen etwa spiralförmigen Tangentialabschnitt der Gebläse-Schwungradabdeckung verfügt, welcher Tangentialabschnitt die vom Gebläse geförderte Abluft miitels der Auslassöffnung an die Außenseite der Abdeckhaube bzw. in die Atmosphäre führt. Schließlich weist das Gebläse ein Laufradsystem mit gemischter Strömung, Radialströmung oder dgl. auf, was ohne weiteres darstellbar ist.

In der Zeichnung ist ein Ausführungsbeispiel der Erfindung dargestellt, das nachstehend näher beschrieben wird.

Es zeigen
Fig. 1 eine schematische Seitenansicht eines Außenbordmotors mit einer Brennkraftmaschine, einer Abdeckhaube und einem Luftführungssystem,
Fig. 2 eine schematische Ansicht von oben auf ein Kurbelwellensystem der Brennkraftmaschine,
Fig. 3 eine Schrägansicht von links oben auf die Abdeckhaube mit Teilen des Luftführungssystems nach Fig. 1,
Fig. 4 eine Ansicht entsprechend Fig. 3, jedoch ohne Abdeckhaube,
Fig. 5 eine Schrägansicht von unten in die Abdeckhaube hinein mit Teilen des Luftführungssystems nach den Fig. 1, 4 und 5,
Fig. 6 eine Schrägansicht auf Teile der Brennkraftmaschine mit einem Gebläse des Luftführungssystems,
Fig. 7 eine Ansicht etwa in Pfeilrichtung A der Fig. 6,
Fig. 8 eine Schrägansicht von links oben auf die Brennkraftmaschine mit Nebenaggregaten,
Fig. 9 eine Schrägansicht von links oben auf die die Abdeckhaube mit einer Auslassöffnung.

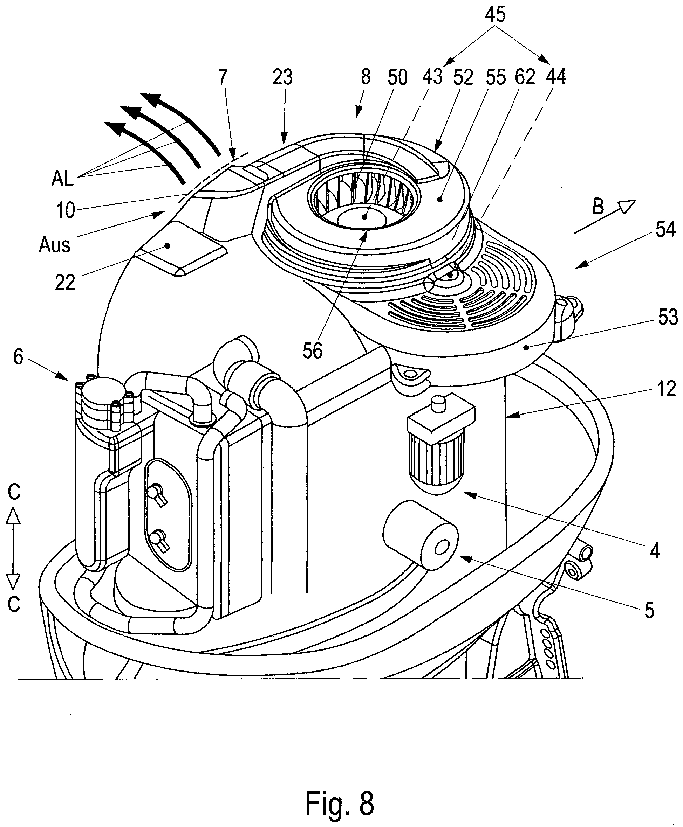

Ein Außenbordmotor 1 umfasst eine Brennkraftmaschine 2 zum Antrieb eines Schiffs mit einem Luftführungssystem 3, das unter Vermittlung von einer Oberflächen der Brennkraftmaschine 2 und nicht näher erläuterten an Außenseiten der Brennkraftmaschine 2 montierten Nebenaggregaten 4, 5 und 6 -Fig. 8-umgebenden, kuppelartigen Abdeckhaube 7 wirksam ist. Zu dem Luftführungssystem 3 gehört zum einen ein von der Brennkraftmaschine 2 angetriebenes Gebläse 8 und zum anderen Einlassöffnung 9 und Auslassöffnung 10 in der Abdeckhaube 7, die Brennkraftmaschine 2 weitreichend und kuppelartig verkleidet. Über die Einlassöffnung 9 treten in einen Innenraum 11 der Abdeckhaube 7 zu steuernde Luftströme Ls ein, die unter Vermittlung der Auslassöffnung 10 aus dieser Abdeckhaube 7 entweichen.

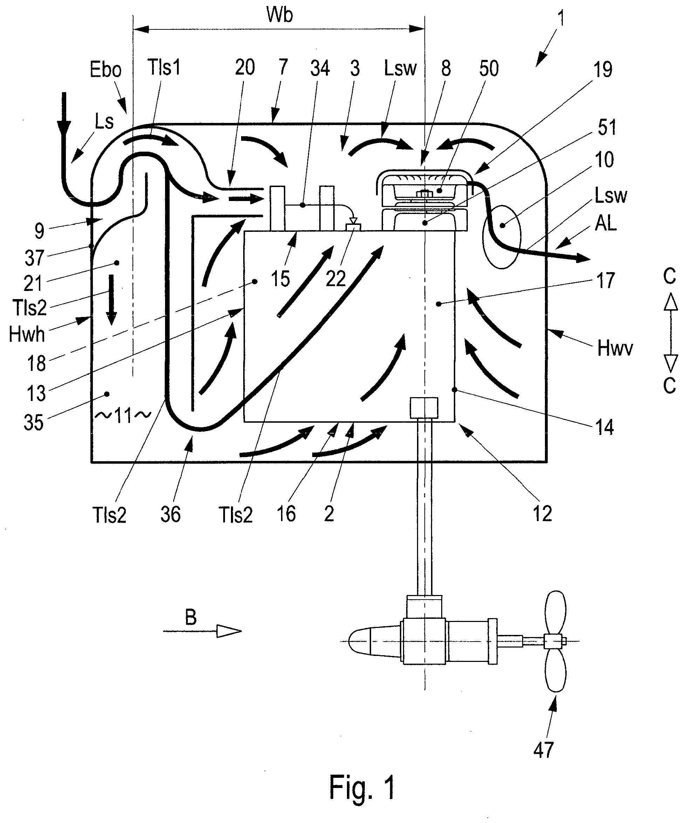

Die Brennkraftmaschine 2 verfügt über ein Maschinengehäuse 12, das in Fahrtrichtung B betrachtet, eine Rückseite 13, eine Vorderseite 14, in Höhenrichtung C-C gesehen eine Oberseite 15 sowie eine Unterseite 16 und darüber hinaus eine rechte Längsseite 17 sowie eine linke Längsseite 18; an den beiden Letzteren sind die Nebenaggregate 4, 5 und 6 angebracht. Beeinflusst von dem Gebläse 8, das ein Laufradsystem 19 mit gemischter Strömung, Radialströmung oder dgl. aufweist, gelangen die Luftströme über die Einlassöffnung 9 in Richtung Innenraum 11 der Abdeckhaube 7. Benachbart der Einlassöffnung 9 d.h. im Innenraum 11 werden die Luftströme Ls in erste Teilluftströme Tls1 und zweite Teilluftströme Tls2 getrennt - Fig. 1-.

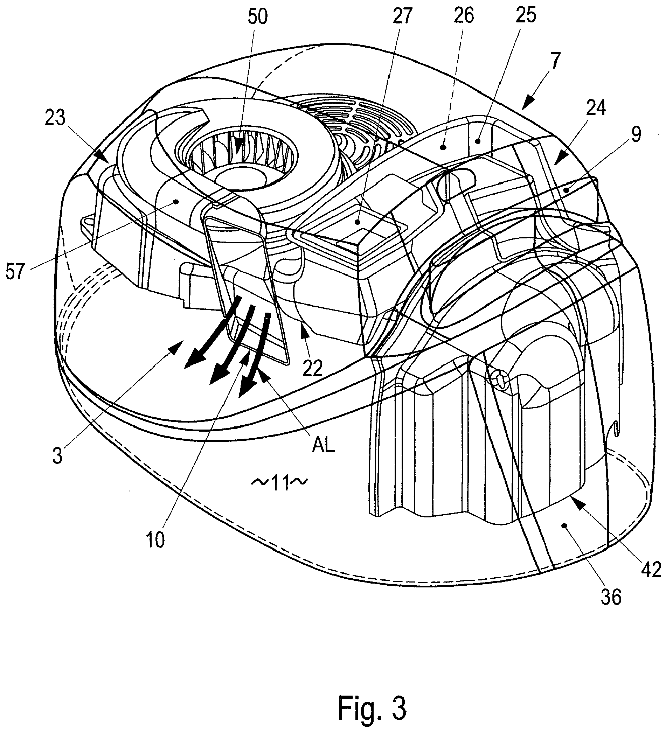

Hierzu umfasst das Luftführungssystem 3 in der Abdeckhaube 7 eine erste Leiteinrichtung 20 für die ersten Teilluftströme Tls1 und eine zweite Leiteinrichtung 21 für die zweiten Teilluftströme Tls2. Die ersten Teilluftströme Tls1 werden als Ansaugluft einer Sauganlage 22 der Brennkraftmaschine 2 zugeführt, wogegen die zweiten Teilluftströme Tls2 durch die Wirkung des Gebläses 8, die durch den Betreib der Brennkraftmaschine 2 erwärmten Oberflächen der Brennkraftmaschine 2 und der Nebenaggregate 4, 5 und 6, beaufschlagen. Des Weiteren werden die von den Oberflächen der Brennkraftmaschine 2 und den Nebenaggregaten 4, 5 und 6 erwärmten Luftströme Lsw vom Gebläse 8 und einer dritten Leiteinrichtung 23 -Fig. 3- als Abluft AL über die Auslassöffnung 10 in der Abdeckhaube 7 an eine Außenseite Aus der besagten Abdeckhaube 7 bzw. in die Atmosphäre geleitet -Fig. 8-.

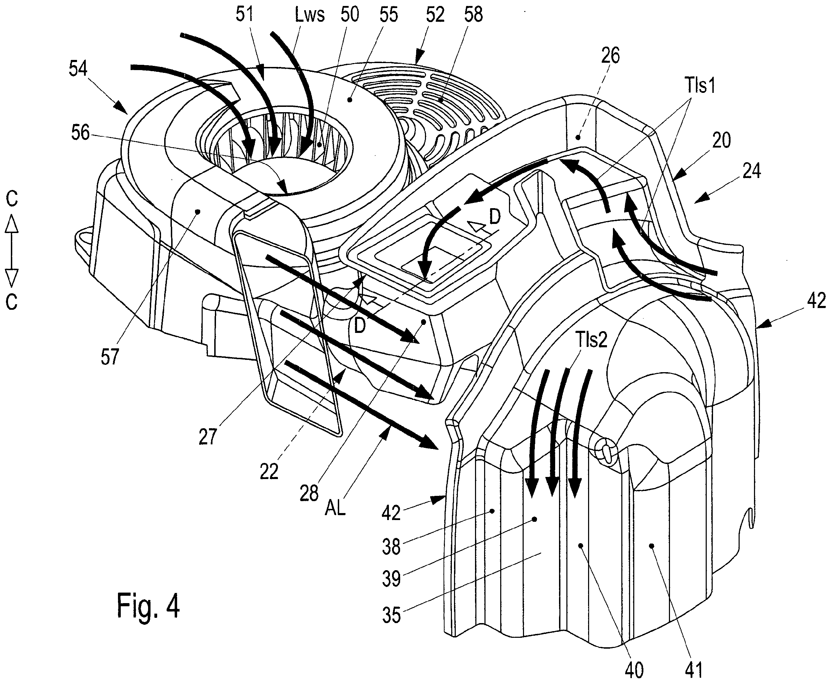

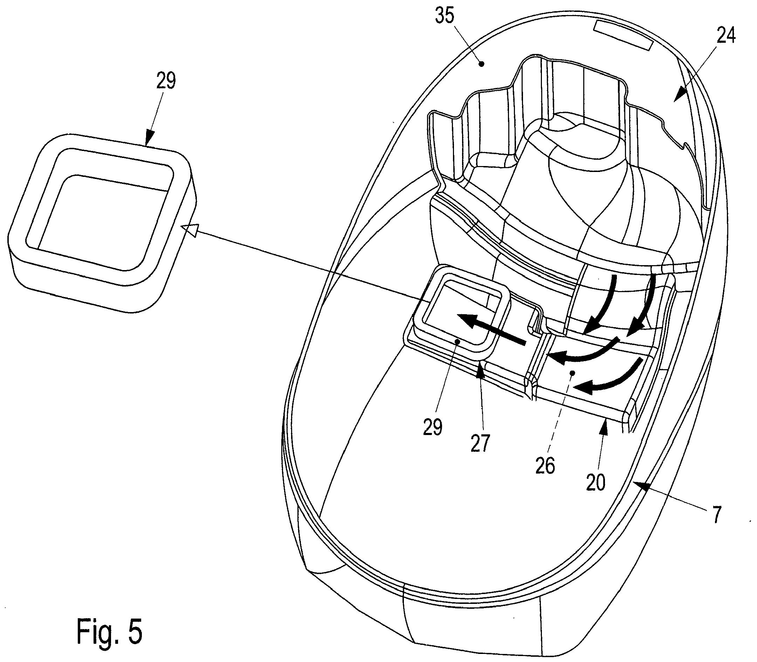

Die Einlassöffnung 9 ist an einer hinteren aufrechten Haubenwand Hwv eines oberen Endbereichs Ebo der Abdeckhaube 7 angeordnet. Und an die Einlassöffnung 9 schließt eine Verteilereinrichtung 24 -Fig. 3 und 4- an, über die der ersten Teilluftströme Tls1 und der zweite Teilluftströme Tls2 in die erste Leiteinrichtung 20 bzw. die zweite Leiteinrichtung 21 geführt wird. Die erste Leiteinrichtung 20 bildet mit einem oberen Haubenwandabschnitt 25 der Abdeckhaube 7 einen Kanalbereich 26 - Fig. 3-. Letzterer ist mit einem z.B. horizontal ausgerichteten und viereckförmigen Ausgangsbereich 27 -Fig. 3 und 5- an einen korrespondierenden Eingangsbereich 28 -Fig.8- zur Sauganlage 22 hin angeschlossen.

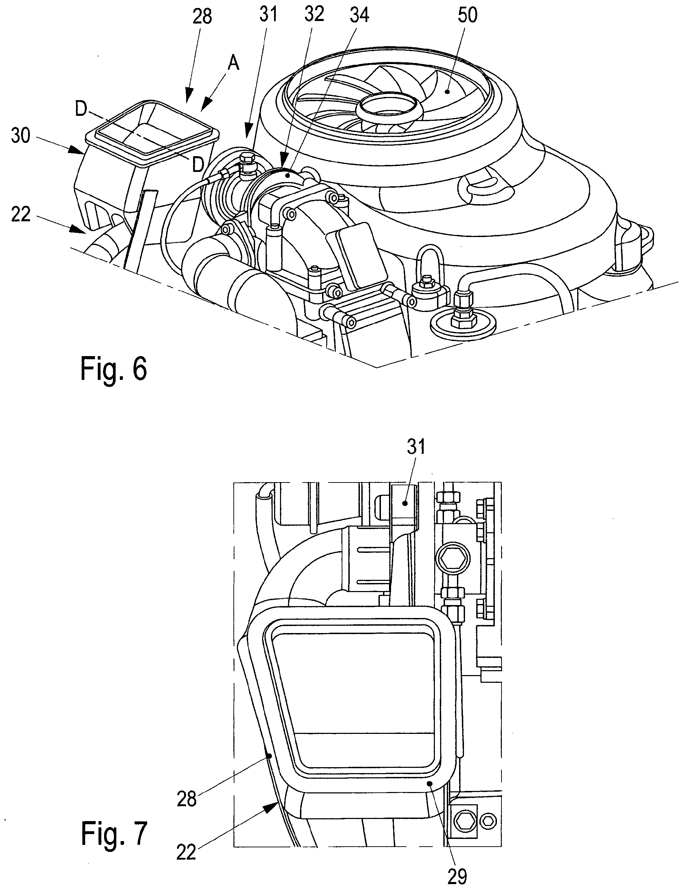

Zum Öffnen der Abdeckhaube 7, um Zugang zur Brennkraftmaschine 2 zu ermöglichen, sind der Ausgangsbereich 27 und der Eingangsbereich 28 in einer etwa horizontale Ebene D-D -Fig. 4- trennbar. In dieser Ebene D-D, will heißen, zwischen Ausgangsbereich 27 und Eingangsbereich 28 ist ein entsprechend angepasster Dichtkörper 29 -Fig. 5- wirksam. Der Eingangsbereich 28 ist an einen Sammelbehälter 30 angeschlossen, der mit einem Verdichter 31 einer mit der Sauganlage 22 verbundenen mit einer Turbine 32 versehenen Turboladereinrichtung 34 Fig. 3 und 6- baulich vereinigt ist.

Die zweiten Teilluftströme Tls2 wird mittels eines aufrechten Kanals 35 in Richtung Unterseite 16 der Brennkraftmaschine 2 geleitet. Von dort aus gelangen über einen Überströmbereich 36 -Fig. 1- die zweiten Teilluftströme Tls2 in den Innenraum 11 der Abdeckhaube 7, und zwar dergestalt, dass die zweiten Teilluftströme Tls2 mit Unterstützung des Gebläses 8 die Oberflächen der Brennkraftmaschine 2 und der Nebenaggregate entwärmend beeinflussen. Der Kanal 35 wird einerseits durch einen Haubenwandabschnitt 37 der aufrechten Haubenwand Hwh und andererseits durch im Winkel zueinander angeordnete Begrenzungsabschnitte 38, 39 40 und 41 -Fig. 4-eines Einsatzes 42 der Abdeckhaube gebildet. Im Ausführungsbeispiel sind der Kanalbereich 26 und der Einsatz 42 - es sind Formteile z.B. aus Kunststoff- durch Kleben, Schrauben oder dgl. mit der Abdeckhaube 7 -Fig. 3 und 4- verbunden.

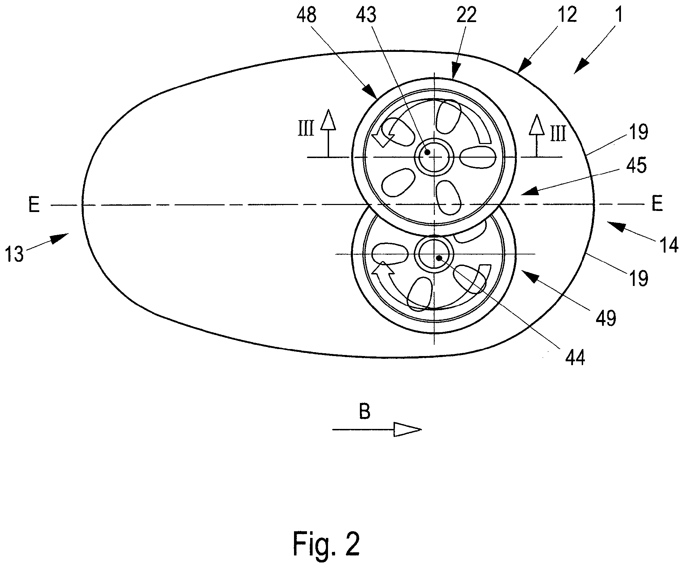

Die Brennkraftmaschine 2 der Hubkolbenbauart verfügt über wenigsten einen Hubkolben, der unter Vermittlung von zwei Pleueln mit zwei parallel zueinander ausgerichteten und in gegenläufigen Drehrichtungen rotierenden ersten und zweiten Kurbelwellen 43 und 44 -Fig.2- in Wirkverbindung steht. Die ersten und zweiten Kurbelwellen 43 und 44 eines Kurbelwellensystems 45 -Fig. 2 und 8- stehen relativ aufrecht zu einer nicht gezeigten Wasserlinie des Schiffs und treiben mittels einer Antriebswelle 46 unterhalb einer Wasserlinie eine Schiffsschraube 47 -Fig. 1- an. Die Kurbelwellen 43 und 44 ragen über die Oberseite 5 der Brennkraftmaschine 1 hinaus, liegen -quer zur Fahrtrichtung B gesehen- symmetrisch zu einer Mittellängsebene E-E -Fig. 2- der Brennkraftmaschine 2 nebeneinander, und sie sind an Endbereichen mit ersten und zweiten Schwungrädern 48 und 49 -Fig. 1 und 2-versehen. In Höhenrichtung C-C betrachtet sind das erste obere Schwungrad 48 und das zweite untere Schwungrad 49 versetzt zueinander an den Kurbelwellen 43 und 44 befestigt, wobei sie sich aus raumsparenden Gründen bereichsweise gegenseitig überlappen -Fig. 2-. Das erste Schwungrad 48 liegt oberhalb des zweiten Schwungrads 49, welches erste Schwungrad 48 das Gebläse 8 bzw. ein Laufrad 50 -Fig. 3- des Laufradsystems 19 trägt -Fig.1- und antreibt. Und das erste Schwungrad 48 und das Gebläse 8 sind baulich vereinigt.

Die Brennkraftmaschine 2 nimmt mit dem Maschinengehäuse 12 die Kurbelwellen 43 und 44 auf, und die Brennkraftmaschine 2 arbeitet nach dem Diesel Einspritzverfahren, wobei zu ihrer Betriebsoptimierung die Turboladereinrichtung 34 mit dem Verdichter 31 und der Turbine 32 vorgesehen ist. Die Turboladereinrichtung 34 ist mit der Sauganlage 22 der Brennkraftmaschine 2 verbunden, welche Turboladereinrichtung 34 und Sauganlage 22 an der Oberseite 15 der Brennkraftmaschine 2 angeordnet sind, und zwar unweit der -in Fahrtrichtung B betrachtet- hinteren Haubenwand Hwh der Abdeckhaube 12. Weitere Details der Brennkraftmaschine 1 sind der, eine ähnliche Brennkraftmaschine behandelnden, EP 2 980 374 A1 zu entnehmen.

An der hinteren Haubenwand Hwh ist die Einlassöffnung 9 vorgesehen, wogegen das Gebläse 18, das in Wirkverbindung mit der ersten Kurbelwelle 43 steht, -in Fahrtrichtung B gesehen- nahe einer vorderen aufrechten Haubenwand Hwv der Abdeckhaube 7 angeordnet ist. Dank der Distanzierung des aufrechten Kanals 35 bzw. des benachbart der Unterseite liegenden Überströmbereichs 36 der zweiten Leiteinrichtung 21 und einer aufrechten Drehachse 51 des Laufrads 50 des Gebläses 8 ergibt sich -in Fahrichtung B betrachtet- ein Wirkungsbereich Wb -Fig.1-. Dieser bewirkt eine gezielte Beaufschlagung der Oberflächen der Brennkraftmaschine 2 und der Nebenaggregate 4, 5 und 6- mit den Teilluftströmen Lst2.

Das erste obere Schwungrad 48 mit Gebläse 8 und das zweite untere Schwungrad 49 sind mit einem ersten oberen Schutzhaubenabschnitt 51 bzw. einem zweiten Schutzhaubenabschnitt 52 umfassend abgedeckt. Der erste Schutzhaubenabschnitt 51 und der zweite Schutzhaubenabschnitt 52 sind als eine aus einem Stück hergestellte oder aus mehreren Teilen bestehende, gehäuseartigen Gebläse-Schwungradabdeckung 54 ausgebildet. Darüber hinaus ist der erste das Gebläse 8 verkleidende Schutzhaubenabschnitt 51 an einer Oberseite 55 mit einer Eintrittsöffnung 56 für erwärmte Teilluftströme Lstw versehen, und besagter Haubenbabschnitt 51 der Gebläse-Schwungradabdeckung 53 verfügt über einen spiralförmigen Tangentilabschnitt 57. Dieser führt die vom Gebläse 8 geförderte Abluft AL mittels der Auslassöffnung 10 an die Außenseite Aus der Abdeckhaube 7. Zur Entlüftung des zweiten Schutzhaubenabschnitts 52 sind in einen Deckelbereich ringförmige Durchgangschlitze 58 vorgeshehen.

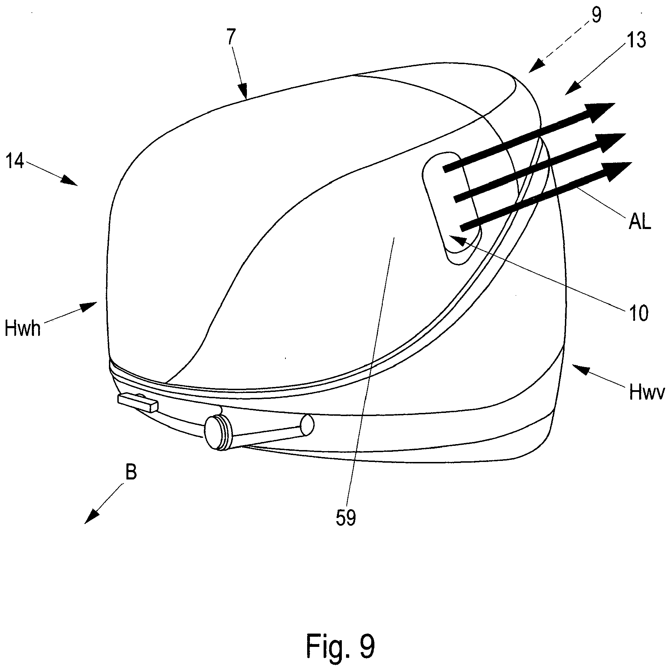

Schließlich ist in Fig. 9 dargestellt, dass die Auslassöffnung 10 an einer -in Fahrtrichtung B gesehen- linken Haubenwand 59 vorgesehen ist, aus der die Abluft AL vom Gebläse 8 bzw. dem Tangentialbschnitt 57 kommend austritt.

## Patentansprüche

1. Außenbordmotor, umfassend eine Brennkraftmaschine zum Antrieb eines Schiffs mit einem Luftführungssystem, das unter Vermittlung von einer Oberflächen der Brennkraftmaschine und Nebenaggregate umgebenden Abdeckhaube wirksam ist, welche Abdeckhaube mit einer oder mehreren Ein- und Auslassöffnungen für in einem Innenraum der Abdeckhaube bewegte Luftströme versehen ist, wobei ein über die Brennkraftmaschine angetriebenes Gebläse die Luftströme im Innenraum der Abdeckhaube zumindest teilweise beeinflusst, **dadurch gekennzeichnet, dass** über eine Einlassöffnung (9) Luftströme (Ls) in Richtung Innenraum (11) der Abdeckhaube (7) eintreten, die benachbart der Einlassöffnung (9) in erste Teilluftströme (Tls1) und zweite Teilluftströme (Tls2) getrennt werden, wobei das Luftführungssystem (3) in der Abdeckhaube (7) eine erste Leiteinrichtung (20) für die ersten Teilströme (Tls1) und eine zweite Leiteinrichtung (21) für die zweiten Teilluftströme (Tls2) umfasst, welche ersten Teilluftströme (Tls1) als Ansaugluft einer Sauganlage (22) der Brennkraftmaschine (2) zugeführt werden und welche zweiten Teilluftströme Tls2) mit Unterstützung des Gebläses (8) die durch den Betrieb der Brennkraftmaschine (2) erwärmten Oberflächen der Brennkraftmaschine (2) und der Nebenaggregate (4, 5 und 6) beaufschlagen und dass die von den Oberflächen der Brennkraftmaschine (2) und den Nebenaggregaten (4, 5 und 6) erwärmten Luftströme (Lsw) vom Gebläse (8) und einer dritten Leiteinrichtung (23) als Abluft (AL) über eine Auslassöffnung (10) in der Abdeckhaube (7) an eine Außenseite (Aus) der besagten Abdeckhaube (7) bzw. in die Atmosphäre gefördert werden.

2. Außenbordmotor nach Anspruch 1, **dadurch gekennzeichnet, dass** die Einlassöffnung (15) an einer aufrechten Haubenwand (Hbh) benachbart einem oberen Endbereich (Ebo) der Abdeckhaube (7) angeordnet ist, wobei an die Einlassöffnung (9) eine Verteilereinrichtung (24) in dieser Abdeckhaube (7) anschließt, über welche Verteilereinrichtung (24) der erste Teilluftstrom (Tls1) und der zweite Teilluftstrom (tTls2) in die erste Leiteinrichtung (20) bzw. die zweite Leiteinrichtung (21) geführt wird.

3. Außenbordmotor nach den Ansprüchen 1 und 2, **dadurch gekennzeichnet, dass** die erste Leiteinrichtung (20) mit einem oberen Haubenwandabschnitt (25) der Abdeckhaube (7) einen Kanalbereich (26) bildet, der mit einem bspw. horizontal ausgerichteten und viereckförmigen Ausgangsbereich (27) an einen korrespondierenden Eingangsbereich (28) zur Sauganlage hin angeschlossen ist.

4. Außenbordmotor nach den Ansprüchen 1 und 3, **dadurch gekennzeichnet, dass** zum Öffnen der Abdeckhaube (7) der Ausgangsbereich (27) und der Eingangsbereich (28) voneinander trennbar sind, die unter Zwischenschaltung eines ringförmigen Dichtkörpers (29) zusammenwirken.

5. Außenbordmotor nach den Ansprüchen 1 und 4, **dadurch kennzeichnet, dass** der Eingangsbereich (28) an einen Sammelbehälter (30) angeschlossen ist, der mit einem Verdichter (31) einer mit der Sauganlage (22) verbundenen Turboladereinrichtung baulich (34) vereinigt ist.

6. Außenbordmotor nach Anspruch 2, **dadurch gekennzeichnet, dass** die zweiten Teilluftstrom (Tls2) mittels der zweiten Leiteinrichtung (21), umfassend einen aufrechten Kanal (35), in Richtung einer Unterseite (16) der Brennkraftmaschine (2) geleitet wird und von dort über einen Überströmbereich (36) in den Innenraum (11) der Abdeckhaube (7) gelangt, dergestalt, dass der zweite Teilluftstrom (Tls2) die Oberflächen der Brennkraftmaschine (2) und der Nebenaggregate (4, 5 und 6) entwärmend beeinflusst.

7. Außenbordmotor nach Anspruch 2 und 6, **dadurch gekennzeichnet, dass** der Kanal (35) einerseits durch einen Haubenwandabschnitt (37) der aufrechten Haubenwand (Hwh) und andererseits durch Begrenzungsabschnitte (38, 39, 40 und (41) eines Einsatzes (42) der Abdeckhaube (7) gebildet wird.

8. Außenbordmotor nach den Ansprüchen 3 und 7, **dadurch gekennzeichnet, dass** der Kanalbereich (26) und der Einsatz (42) durch Kleben, Schrauben oder dgl. mit der Abdeckhaube (7) verbunden sind.

9. Außenbordmotor nach Anspruch 1, **dadurch gekennzeichnet, dass** das Gebläse (8) unter Vermittlung einer aufrechten über die Oberseite (5) der Brennkraftmaschine (2) hinausragende aufrechte Kurbelwelle (43) angetrieben wird.

10. Außenbordmotor nach den Ansprüchen 1, 2 und 9, **dadurch gekennzeichnet, dass** in Fahrtrichtung (B) des Schiffs betrachtet die Einlassöffnung (9) benachbart der hinten liegenden Haubenwand (Hwh) und das Gebläse (8) an der Kurbelwelle (43) nahe einer vorderen Haubenwand (Hwv) angeordnet sind.

11. Brennkraftmaschine nach den Ansprüchen 9, **dadurch gekennzeichnet, dass** die das Gebläse (8) antreibende als erste Kurbelwelle (43) zusammen mit einer zweiten parallel zur ersten Kurbelwelle (43) verlaufenden zweiten Kurbelwelle (44) ein Kurbelwellensystem (45) der Brennkraftmaschine (2) bilden, bei dem die Kurbelwellen (43 und 44) über zwei Pleuel mit wenigstens einem Hubkolben in Wirkverbindung stehen.

12. Brennkraftmaschine nach den Ansprüchen 9 und 11, **dadurch gekennzeichnet, dass** die die quer zur Fahrtrichtung (A) beiderseits einer Mittellängsebene angeordneten Kurbelwellen (19 und 20) an ihren über die Oberseite (5) hinausragenden oberen Enden erste und zweite Schwungräder (49 und 50) aufweisen, die in Höhenrichtung (C-C) der Kurbelwellen (43 und 44) betrachtet versetzt zueinander angeordnet sind und sich bereichsweise überlappen, wobei das Gebläse (18) mit dem ersten oberen Schwungrad (49) baulich vereinigt ist.

13. Brennkraftmaschine nach den Ansprüchen 11 und 12, **dadurch gekennzeichnet, dass** das erste obere Schwungrad (48) mit Gebläse (8) und das zweite untere Schwungrad (49) mit einem ersten oberen Schutzhaubenabschnitt (52) bzw. einem unteren zweiten Haubenabschnitt (53) abgedeckt sind, die als eine aus einem Stück hergestellte oder aus mehreren Teilen bestehende Gebläse-Schwungradabdeckung (54) ausgebildet sind.

14. Brennkraftmaschine nach den Ansprüchen 1, 4 und 6, **dadurch gekennzeichnet, dass** der erste das Gebläse (8) verkleidende Schutzhaubenabschnitt (52) mit der dritten Leiteinrichtung (23) versehen ist, der über einen etwa spiralförmigen Tangentialkanalabschnitt (57) der Gebläse-Schwungradabdeckung (54) verfügt, welcher Tangentialabschnitt (57) die vom Gebläse (8) geförderte Abluft (AL) über die Auslassöffnung (10) an die Außenseite (Aus) der Abdeckhaube (12) bzw. in die Atmosphäre führt.

15. Brennkraftmaschine nach den Ansprüchen 1 bis 5, **dadurch gekennzeichnet, dass** das Gebläse (8) ein Laufradsystem (19) mit gemischter Strömung, Radialströmung oder dgl. aufweist.
